# EUROPEAN PATENT SPECIFICATION

(11) **EP 3 284 664 B1**
(45) Date of publication and mention of the grant of the patent: **17.10.2018**
(21) Application number: 17001398.1
(22) Date of filing: 16.08.2017
(51) Int. Cl.: B62K 15/00

(54) **FOLDING FRAME OF A TWO-WHEEL VEHICLE**
KLAPPRAHMEN EINES ZWEIRÄDRIGEN FAHRZEUGS
CADRE PLIABLE D'UN VÉHICULE À DEUX ROUES

(30) Priority: 17.08.2016 PL 41838116
(43) Date of publication of application: 21.02.2018
(73) Proprietor: Grzegorz, Olech, 00-737 Warszawa (PL)
(72) Inventor: Grzegorz, Olech, 00-737 Warszawa (PL)
(74) Representative: Skrzynska-Majewska, Izabela

(56) References cited:
- US-A1- 2004 212 171
- US-A1- 2005 121 877

## Description

### Field of the invention

The subject of the invention is a folding frame of a two-wheel vehicle with a dual-axis swivel. The two-wheel vehicle frame with a dual-axis swivel folds in two ways: in the symmetry plane of the vehicle, which allows folding the frame to small size, and in particular to a low width with at least the front wheel removed, or with the head tube expanding beyond the symmetry plane of the vehicle, which allows a compact folding of the vehicle with both front and rear wheel installed.

### Background art

Two-wheel vehicles, and especially top quality folding bicycles, have been gaining more and more popularity among bikers. In connection with the above, the demand for such bicycles is also on the rise.

Many solutions assume that a bicycle folds perpendicularly to the frame plane, which results in a high thickness of the folded bicycle, especially as the rear and front wheels are usually positioned side by side when the bicycle is folded.

In turn, solutions based on the "umbrella style" folding of a bicycle require small wheels and, as a result, make it impossible to achieve high speeds.

There are also solutions where a bicycle can be folded in the frame plane, with the front wheel removed.

Document US2005/0121877, discloses a folding frame known from the prior art.

### Purpose of the invention

The purpose of the invention is to make it possible to fold a vehicle in two easy ways: one which allows quick folding without the wheels removed and the other one which allows folding down a vehicle to relatively small size with at least the front wheel removed, and especially achieving the smallest size possible perpendicularly to the symmetry plane of the bicycle.

This purpose can be achieved by using a dual-axis swivel, which is a hinge with two axes and is rotatably connected with the front section of the frame at one end and, at the other end, is swingly connected to fold with the rear section of the frame, which makes it possible to fold the frame in the symmetry plane and to expand the head tube beyond that plane.

The present invention makes it possible to fold a two-wheel vehicle, and especially a bicycle, in its symmetry plane and to fold a two-wheel vehicle with installed wheels so that the front wheel is positioned next to the rear wheel beyond the vehicle symmetry plane. This invention concerns two-wheel vehicles which can be folded to small size, especially width, in order to reduce the space they take in storage or transport, in particular in car booth or in cramped storerooms at home.

The subject of the invention is the folding frame of a two-wheel vehicle with the front section of the frame containing an element for fixing the vertical axis of rotation of the dual-axis swivel, the front element of the blocking system and an element for fixing the front wheel fork; the rear section of the frame containing an element for fixing the horizontal axis of rotation of the dual-axis swivel, the rear element of the blocking system and an element for fixing the rear wheel; a dual-axis swivel having two axes that are fixed to each other: the vertical axis of rotation, which is in the same plane with the axis of rotation of the front wheel fork and, at the same time, is within the symmetry plane of the rear section of the frame or the symmetry plane of the rear wheel or rear tyre, and the horizontal axis of rotation, which is perpendicular to the symmetry plane of the rear section of the frame or to the symmetry plane of the rear wheel or rear tyre.

In an embodiment of the invention the folding frame of a two-wheel vehicle is designed so that the element for fixing the vertical axis of rotation of the dual-axis swivel, the front element of the blocking system and the element for fixing the front wheel fork do not change their position to each other and the element for fixing the horizontal axis of rotation of the dual-axis swivel, the rear element of the blocking system and the element for fixing the rear wheel do not change their position to each other.

In another embodiment of the invention the folding frame of a two-wheel vehicle is designed so that the element for fixing the vertical axis of rotation of the dual-axis swivel, the front element of the blocking system and the element for fixing the front wheel fork do not change their position to each other, the rear section of the frame of a two-wheel vehicle is divided by a hinge the axis of rotation of which is perpendicular to the symmetry plane of the rear section of the frame or to the symmetry plane of the rear wheel or rear tyre, or the rear element of the blocking system, the element for fixing the rear wheel and the hinge do not change their position to each other and the element for fixing the horizontal axis of rotation of the dual-axis swivel and the hinge do not change their position to each other.

In further embodiment of the invention the folding frame of a two-wheel vehicle is designed so that the element for fixing the vertical axis of rotation of the dual-axis swivel, the front element of the blocking system and the element for fixing the front wheel fork do not change their position to each other, the rear section of the frame of a two-wheel vehicle is divided by a hinge the axis of rotation of which is perpendicular to the symmetry plane of the rear section of the frame or to the symmetry plane of the rear wheel or rear tyre, the element for fixing the rear wheel and the hinge do not change position to each other, the rear element of the blocking system, the element for fixing the horizontal axis of rotation of the dual-axis swivel and the hinge do not change their position to each other, the folding frame of a two-wheel vehicle contains a top and bottom stretching belt which stabilise the front section of the frame relative to the rear section of the frame.

The dual-axis swivel is connected, via a pivot, with the element for fixing the vertical axis of rotation of the dual-axis swivel situated in the front section of the frame of a two-wheel vehicle, and swingly with the element for fixing the horizontal axis of rotation of the dual-axis swivel situated in the rear section of the frame. When the frame of a two-wheel vehicle is unfolded, i.e. the vehicle is ready for use, the vertical axis of rotation of the pivot is in the same plane as the axis of rotation of the front wheel fork and, at the same tame, is within the symmetry plane of the rear section of the frame or the symmetry plane of the rear wheel or rear tyre while the horizontal axis of rotation of the openings of the dual-axis swivel is perpendicular to the symmetry plane of the rear section of the frame or the symmetry plane of the rear wheel or rear tyre.

A two-wheel vehicle is, in particular, a bicycle, but it can also be another two-wheel vehicle, such as a motor bicycle. A bicycle with a frame designed according to the invention may also be equipped with an additional electric drive.

### Brief Description of Drawings

Fig. 1 presents the dual-axis swivel
Fig. 2 presents the frame described in example 1
Fig. 3 presents the frame described in example 2
Fig. 4 presents the frame described in example 3

The invention concerns the folding frame of a two-wheel vehicle which includes:
- front section of the frame (1), which comprises:
   - an element for fixing the vertical axis of rotation of the dual-axis swivel (8)
   - front element of the blocking system (6)
   - an element for fixing the front wheel fork (10)
- rear section of the frame (2), which comprises:
   - an element for fixing the horizontal axis of rotation of the dual-axis swivel (9)
   - rear element of the blocking system (7)
   - an element for fixing the rear wheel (11)
- dual-axis swivel (3), which has two axes that are fixed to each other:
   - vertical axis of rotation (4), which is in the same plane as the axis of rotation of the front wheel fork (12) and, at the same tame, is within the symmetry plane of the rear section of the frame (2) or the symmetry plane of the rear wheel or rear tyre
   - horizontal axis of rotation (5), which is perpendicular to the symmetry plane of the rear section of the frame (2) or to the symmetry plane of the rear wheel or rear tyre

In one of the embodiments, both front and rear section of the frame are stiff elements, which means that:
∘ elements (10), (8) and (6) do not change their position to each other
∘ elements (9), (7) and (11) do not change their position to each other
Alternatively, the front section of the frame is a stiff element and the rear section of the frame consists of two parts that are stiff to each other, swingly installed to permanently stay within the symmetry plane of the frame while the rear element of the blocking system (7) and the element for fixing the rear wheel (11) are in the same section, which means that:
∘ elements (10), (8) and (6) do not change their position to each other
∘ the rear section of the two-wheel vehicle frame is divided by a hinge (13) the axis of rotation of which is perpendicular to the symmetry plane of the rear section of the frame (2) or to the symmetry plane of the rear wheel or rear tyre
∘ elements (7), (11) and (13) do not change their position to each other
∘ elements (9) and (13) do not change their position to each other

In another embodiment, the front section of the frame is a stiff element and the rear section of the frame consists of two parts that are stiff to each other and are swingly installed and permanently stay within the symmetry plane of the frame while the rear element of the blocking system (7) and the element for fixing the rear wheel (11) are not in the same section. Such layout does not stiffen the frame after the blocking set is snapped and two stretching belts (14) are added to ensure stiffness, which can be described by the following conditions:
∘ elements (10), (8) and (6) do not change their position to each other
∘ the rear section of the frame of the two-wheel vehicle is divided by a hinge (13) the axis of rotation of which is perpendicular to the symmetry plane of the rear section of the frame (2) or to the symmetry plane of the rear wheel or rear tyre
∘ elements (11) and (13) do not change their position to each other
∘ elements (7), (9) and (13) do not change their position to each other
∘ the folding frame of a two-wheel vehicle comprises a top and bottom stretching belt (14) which stabilise the front section of the frame (1) relative to the rear section of the frame (2).

The dual-axis swivel (3) consists of a pivot (20) having a symmetry axis (4) and ears (21) whose openings share the same symmetry axis (5). The dual-axis swivel (3) is connected via the pivot (20) with the element for fixing the vertical axis of rotation of the dual-axis swivel (8) of the front section of the frame (1) and via the ears (21) with the element for fixing the horizontal axis of rotation of the dual-axis swivel (9) of the rear section of the frame (2). Symmetry axes (4) and (5) are perpendicular to each other. When the vehicle frame is unfolded, i.e. the vehicle is ready for use, the vertical axis of rotation (4) is in the same plane as the axis of rotation (10) of the front wheel fork (12) and, at the same tame, is within the symmetry plane of the rear section of the frame (2) or the symmetry plane of the rear wheel or rear tyre while the horizontal axis of rotation (5) is perpendicular to the symmetry plane of the rear section of the frame (2) or the symmetry plane of the rear wheel or rear tyre.
In one embodiment, the dual-axis swivel (3) has a symmetry plane which contains the symmetry axis of the pivot (4) and to which the symmetry axis (5) is perpendicular.

### Examples

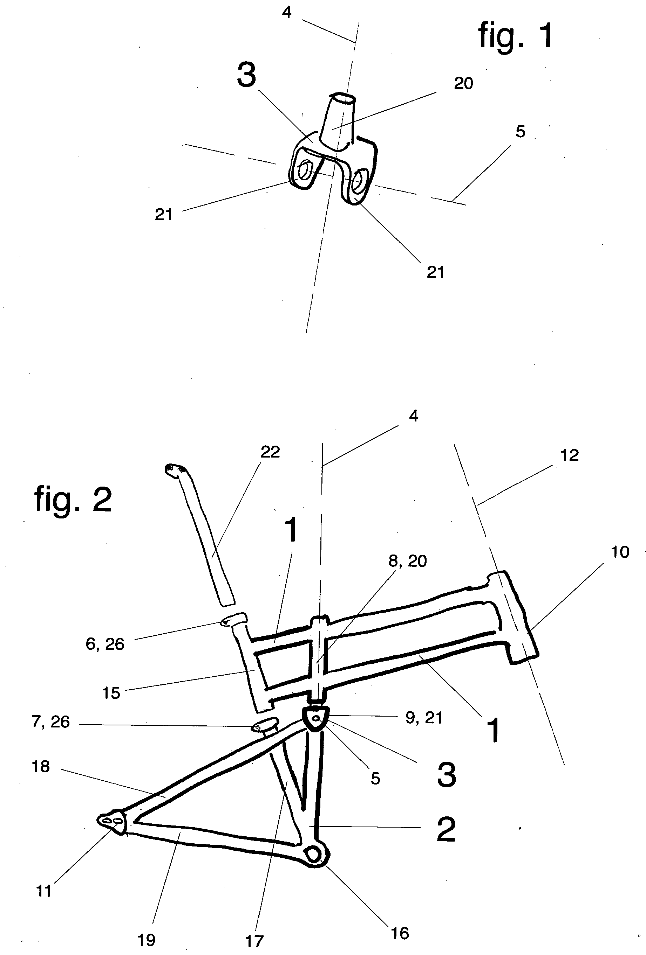

### EXAMPLE 1. Bicycle folding frame (fig. 2)

The front section of the frame (1) is built of an element for fixing the front wheel fork (10), which is the head tube connected by two parallel tubes with the tube for installation of the seat post (15), ended in the top part with a clamp, which is the front element of the blocking system (6). Between the head tube (10) and the tube for installation of the seat post (15), an element for fixing the vertical axis of rotation of the dual-axis swivel (8) is welded in, which is a tube ended on both ends with bearing seats between which the vertical axis of rotation (4) of the dual-axis swivel (3) is situated. The rear section of the frame (2) comprises a short horizontal tube being the element for fixing the horizontal axis of rotation of the dual-axis swivel (9), ended on both ends with bearing seats between which the horizontal axis of rotation (5) of the dual-axis swivel (3) is situated. A vertical tube (9) is connected with the horizontal tube with the bottom bracket (16). An oblique tube (17) ended on its top with an additional clamp, which is the rear element of the blocking system (7), is welded to the bottom bracket (16) and an oblique tube (17) is additionally welded in between the two top tubes of the rear triangle (18). The rear section of the frame also comprises two down tubes of the rear triangle (19). The dual-axis swivel (3) consists of a tube (20) containing the vertical axis of rotation (4) and two sides with openings (21) that determine the horizontal axis of rotation (5). In addition, the seat post (22) and the clamp (6) and clamp (7) make up the blocking system which stiffens the frame.

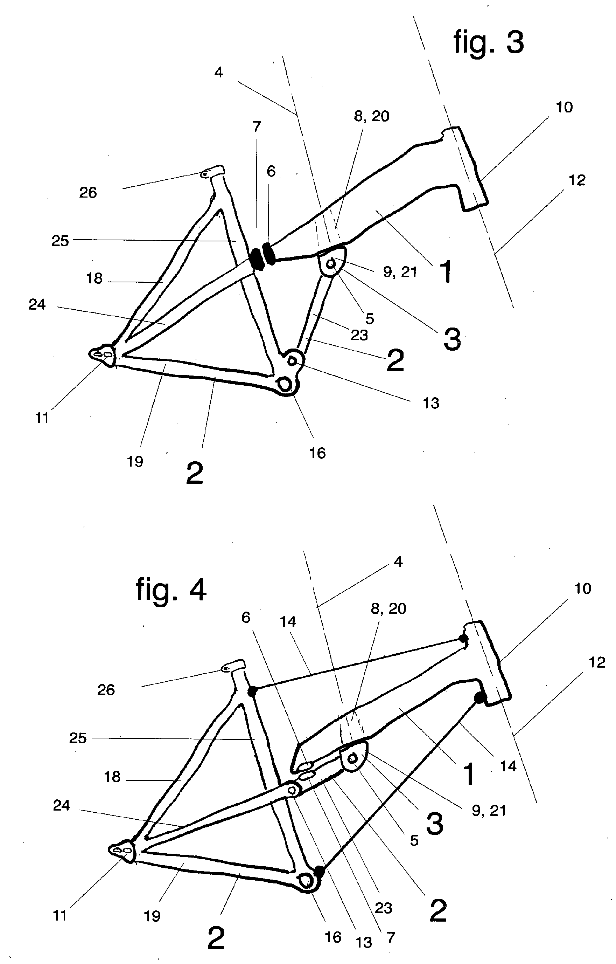

### EXAMPLE 2. Bicycle folding frame (fig. 3)

The front section of the frame (1) is an oblique girder ended in its front part with the head tube which is the element for fixing the front wheel fork (10) and in its rear part with a latch which is the front element of the blocking system (6). In the middle part, that girder has an opening, coaxial with the vertical axis of rotation (4), which is the element for fixing the vertical axis of rotation of the dual-axis swivel (8). The dual-axis swivel (3) consists of a tube (20) comprising the vertical axis of rotation (4) and two sides with openings (21) that determine the horizontal axis of rotation (5). The rear section of the frame (2) comprises two top tubes of the rear triangle (18), two down tubes of the rear triangle (19), two middle tubes of the rear triangle (24) and a seat tube (25) with the bottom bracket (16) at the bottom and the clamp to install the seat post (26) at the top. A latch seat being the rear element of the blocking system (7) is attached to the middle tubes of the rear triangle (24). Two metal pieces with openings which are parts of the hinge (13) are attached to the bottom bracket (16). Between those metal pieces, a tube being the other part of the hinge (13) is installed to rotate. Another similar tube is installed between the sides with openings (21) of the dual-axis swivel. Both those tubes are welded to two ends of the connecting tube (23).

### EXAMPLE 3. Bicycle folding frame (fig. 4)

The front section of the frame (1) is an oblique girder ended in its front part with the head tube which is the element for fixing the front wheel fork (10) and in its rear part with a latch which is the front element of the blocking system (6). In the middle part, that girder has an opening, coaxial with the vertical axis of rotation (4), which is the element for fixing the vertical axis of rotation of the dual-axis swivel (8). The dual-axis swivel (3) consists of a tube (20) comprising the vertical axis of rotation (4) and two sides with openings (21) that determine the horizontal axis of rotation (5). The rear section of the frame (2) comprises two top tubes of the rear triangle (18), two down tubes of the rear triangle (19), two middle tubes of the rear triangle (24) and a seat tube (25) with the bottom bracket (16) at the bottom and the clamp to install the seat post (26) at the top. Two metal pieces with openings which are parts of the hinge (13) are attached to the middle tubes of the rear triangle (24). Between those metal pieces, a tube being the other part of the hinge (13) is installed to rotate. Another similar tube is installed between the sides with openings (21) of the dual-axis swivel. Both those tubes are welded to two ends of the connecting tube (23), to which the latch seat being the rear element of the blocking system (7) is attached. A stretching belt (14) is stretched between the bottom bracket (16) and the head tube (10). Another stretching belt (14) is stretched between the head tube (10) and the clamp for installation of the seat post (26).

## Claims

1. The folding frame of a two-wheel vehicle **characterized by** that it includes: front section of the frame (1) comprising an element for fixing the vertical axis of rotation of the dual-axis swivel (8), front element of the blocking system (6) and an element for fixing the front wheel fork (10); rear section of the frame (2) comprising an element for fixing the horizontal axis of rotation of the dual-axis swivel (9), rear element of the blocking system (7) and an element for fixing the rear wheel (11); the dual-axis swivel (3) having two axes that are fixed to each other: vertical axis of rotation (4), which is in the same plane with the axis of rotation of the front wheel fork (12) and, at the same time, is within the symmetry plane of the rear section of the frame (2) or the symmetry plane of the rear wheel or rear tyre, and the horizontal axis of rotation (5), which is perpendicular to the symmetry plane of the rear section of the frame (2) or to the symmetry plane of the rear wheel or rear tyre.

2. The folding frame of a two-wheel vehicle according to claim 1, **characterized in that** elements (10), (8) and (6) do not change their position to each other and elements (9), (7) and (11) do not change their position to each other.

3. The folding frame of a two-wheel vehicle according to claim 1, **characterized in that** elements (10), (8) and (6) do not change their position to each other, the rear section of the frame of the two-wheel vehicle is divided by a hinge (13) the axis of rotation of which is perpendicular to the symmetry plane of the rear section of the frame (2) or to the symmetry plane of the rear wheel or rear tyre, elements (7), (11) and (13) do not change their position to each other and elements (9) and (13) do not change their position to each other.

4. The folding frame of a two-wheel vehicle according to claim 1, **characterized in that** elements (10), (8) and (6) do not change their position to each other, the rear section of the frame of the two-wheel vehicle is divided by a hinge (13) the axis of rotation of which is perpendicular to the symmetry plane of the rear section of the frame (2) or to the symmetry plane of the rear wheel or rear tyre, elements (11) and (13) do not change their position to each other, elements (7), (9) and (13) do not change their position to each other, the folding frame of the two-wheel vehicle comprises a top and bottom stretching belt (14) which stabilise the front section of the frame (1) relative to the rear section of the frame (2).

## Patentansprüche

1. Klappbarer Rahmen eines Zweiradfahrzeuges, **dadurch gekennzeichnet, dass** er: einen Vorderteil des Rahmens (1), der ein Element zur Festsetzung einer vertikalen Drehachse des zweiachsigen Drehgelenkes (8), ein Frontelement des Verriegelungssystems (6) und ein Element zur Festsetzung der Gabel des Vorderrades (10) aufweist; einen Hinterteil des Rahmens (2), der ein Element zur Festsetzung einer horizontalen Drehachse des zweiachsigen Drehgelenkes (9), ein hinter Element des Verriegelungssystems (7) und ein Element zur Festsetzung des Hinterrades (11) aufweist; ein zweiachsiges Drehgelenk (3), dass zwei Achsen hat, die gegeneinander über festgesetzt sind: eine vertikale Drehachse (4), die in der gleichen Ebene mit der Drehachse der Gabel des Vorderrades (12) angeordnet ist und zugleich in einer Symmetrieebene des Hinterteils des Rahmens (2) angeordnet ist oder in einer Symmetrieebene des Hinterrades beziehungsweise des Hinterreifens angeordnet ist; und eine horizontale Drehachse (5), die senkrecht gegenüber der Symmetrieebene des Hinterteils des Rahmens (2) oder gegenüber der Symmetrieebene des Hinterrades oder des Hinterreifens angeordnet ist, umfasst.

2. Klappbarer Rahmen eines Zweiradfahrzeuges nach Anspruch 1, **dadurch gekennzeichnet, dass** die Elemente (10), (8), und (6) nicht ihre Lage zueinander ändern und die Elemente (9), (7) und (11) nicht ihre Lage zueinander ändern.

3. Klappbarer Rahmen eines Zweiradfahrzeuges nach Anspruch 1, **dadurch gekennzeichnet, dass** die Elemente (10), (8), und (6) nicht ihre Lage zueinander ändern, der Hinterteil des Rahmens eines Zweiradfahrzeuges durch ein Scharnier (13) geteilt wird, dessen Drehachse gegenüber der Symmetrieebene des Hinterteils des Rahmens (2) oder der Symmetrieebene des Hinterrades oder des Hinterreifens senkrecht angeordnet ist, die Elemente (7), (11) und (13) nicht ihre Lage zueinander ändern und die Elemente (9) und (13) nicht ihre Lage zueinander ändern.

4. Klappbarer Rahmen eines Zweiradfahrzeuges nach Anspruch 1, **dadurch gekennzeichnet, dass** die Elemente (10), (8), und (6) nicht ihre Lage zueinander ändern, der Hinterteil des Rahmens eines Zweiradfahrzeuges durch ein Scharnier (13) geteilt wird, dessen Drehachse gegenüber der Symmetrieebene des Hinterteils des Rahmens (2) oder der Symmetrieebene des Hinterrades oder des Hinterreifens senkrecht angeordnet ist, die Elemente (11) und (13) nicht ihre Lage zueinander ändern, die Elemente (7), (9) und (13) nicht ihre Lage zueinander ändern, der klappbare Rahmen eines Zweiradfahrzeuges einen oberen und unteren Spannband (14) umfasst, die den Vorderteil des Rahmens (1) gegenüber dem Hinterteil des Rahmens (2) stabilisieren.

## Revendications

1. Cadre pliant d'un véhicule à deux roues **caractérisé en ce qu'**il comprend: une partie avant du cadre (1) contenant un élément de fixation de l'axe de rotation vertical d'une articulation à deux axes (8), un élément avant du système de verrouillage (6) et un élément de fixation de la fourche de la roue avant (10); une partie arrière du cadre (2) contenant un élément de fixation de l'axe de rotation horizontal d'une articulation à deux axes (9); un élément arrière du système de verrouillage (7) et un élément de fixation de la roue arrière (11); une articulation à deux axes (3) contenant deux axes qui sont fixés l'un par rapport à l'autre de manière suivante: l'axe de rotation vertical (4) se trouve sur le même plan que l'axe de rotation de la fourche avant (12) et en même temps sur le plan de symétrie de la partie arrière du cadre (2) ou sur le plan de symétrie de la roue arrière ou du pneumatique arrière et l'axe de rotation horizontal (5) est perpendiculaire au plan de symétrie de la partie arrière du cadre (2) ou au plan de symétrie de la roue arrière ou du pneumatique arrière.

2. Cadre pliant d'un véhicule à deux roues selon la revendication 1 **caractérisé en ce que** les éléments (10), (8) et (6) ne changent pas de position les uns par rapport aux autres et les éléments (9), (7) et (11) ne changent pas de position les uns par rapport aux autres.

3. Cadre pliant d'un véhicule à deux roues selon la revendication 1 **caractérisé en ce que** les éléments (10), (8) et (6) ne changent pas de position les uns par rapport aux autres, la partie arrière du cadre du véhicule à deux roues est divisée par une charnière (13), dont l'axe de rotation est perpendiculaire au plan de symétrie de la partie arrière du cadre (2) ou au plan de symétrie de la roue arrière ou du pneumatique arrière, les éléments (7), (11) et (13) ne changent pas de position les uns par rapport aux autres et les éléments (9) et (13) ne changent pas de position les uns par rapport aux autres.

4. Cadre pliant d'un véhicule à deux roues selon la revendication 1 **caractérisé en ce que** les éléments (10), (8) et (6) ne changent pas de position les uns par rapport aux autres, la partie arrière du cadre du véhicule à deux roues est divisée par une charnière (13), dont l'axe de rotation est perpendiculaire au plan de symétrie de la partie arrière du cadre (2) ou au plan de symétrie de la roue arrière ou du pneumatique arrière, les éléments (11) et (13) ne changent pas de position les uns par rapport aux autres, les éléments (7), (9) et (13) ne changent pas de position les uns par rapport aux autres, le cadre pliant du véhicule à deux roues comprend une ceinture de tension supérieure et une ceinture de tension inférieure (14) qui stabilisent la partie avant du cadre (1) par rapport à la partie arrière du cadre (2).
